# Europäisches Patentamt

# European Patent Office

# Office européen des brevets

(11) Publication number: **0 055 510**
**B1**

(12) **EUROPEAN PATENT SPECIFICATION**

(45) Date of publication of patent specification: **26.09.84**

(21) Application number: **81304934.3**

(22) Date of filing: **21.10.81**

(51) Int. Cl.³: **C 08 J 5/18,** B 29 D 7/24,
B 65 D 75/00

(54) Process for preparation of heat-shrinkable wrapping of ethylene polymers.

(30) Priority: **31.12.80 US 221711**

(43) Date of publication of application:
**07.07.82 Bulletin 82/27**

(45) Publication of the grant of the patent:
**26.09.84 Bulletin 84/39**

(84) Designated Contracting States:
**BE DE FR GB IT NL**

(56) References cited:
**EP-A-0 021 635**
**FR-A-2 006 547**
**GB-A- 992 897**
**US-A-3 369 655**

The file contains technical information
submitted after the application was filed and
not included in this specification

(73) Proprietor: **MOBIL OIL CORPORATION**
**150 East 42nd Street**
**New York New York 10017 (US)**

(72) Inventor: **Canterino, Peter John**
**39 Mary Drive**
**Towaco New Jersey (US)**

(74) Representative: **West, Alan Harry et al**
**Mobil Court 3 Clements Inn**
**London WC2A 2EB (GB)**

## Description

This invention relates to the production of heat-shrinkable wrapping of ethylene homopolymers and copolymers.

Low density polymers are generally considered as those having a density of less than about 0.94 gm/cm³, and have been modified by many different finishing methods in order to achieve certain physical properties which are desirable for some types of products. Low density polymers such as ethylene homopolymers and copolymers have, for example, been oriented uniaxially and/or biaxially in order to attain a higher tensile strength and to gain a greater degree of clarity and transparency. Also, irradiation of such polymers causes cross-linking of the polymer chains thereby making them more form-stable and capable of retaining a greater degree of transparency.

Finishing operations involving orienting and irradiating have been used also to produce ethylene polymers which have "shrink" energy and are intended for use in the fabrication of, for example containers, closures, squeeze bottles, toys, packaging films and flexible bags. For example, U.S. Patents 3,144,398 and 3,144,399 disclose, respectively, a process for producing a shrinkable polyethylene product by cold-stretching polyethylene, and irradiating the stretched polyethylene with a dosage of from $20 \times 10^6$ to $200 \times 10^6$ rep (one rep being defined as that amount of nuclear radiation which dissipates 93 ergs of energy per gram of tissue, i.e., approximately equal to the amount of energy that would be dissipated by a one roentgen X-ray beam in a gram of tissue). While these disclosures are addressed primarily to processes for preparing low density polymer sheet used for forming shaped articles, similar techniques have been considered for use in the preparation of polymer films.

U.S. Patent 3,022,543 describes a method for preparing polyethylene film having, *inter alia*, a strong biaxial shrinking force and greatly increased tensile strength. The film is prepared by stretching a tube of extruded film in at least one direction while the film is a little above room temperature, cooling the "tube" of film, irradiating the film with a dose of at least $2 \times 10^6$ rep, reheating the irradiated tube in a bath of inert liquid to a temperature of at least 65°C, laterally stretching the tube by the "bubble" method, and stretching the tube, again, longitudinally, at least 100% while in the reheated state followed by cooling the film prior to release of the stretching force.

In U.S. Patent 3,663,662 there is described a cross-linked oriented film of a blend of polymers which is both heat-shrinkable and heat-sealable so as to be usable on automated packing equipment. The blend includes about 70% to 85% by weight of a low density ethylene homopolymer or copolymer having a density of from 0.91 to 0.93 gram/cc at 25°C, the balance of the blend being a high density ethylene homopolymer or copolymer having a density of 0.94 to 0.98 gram/cc at 25°C. The film formed therefrom is capable of shrinking at least 15% in each direction in the plane of the film at a temperature of 100°C, and has a shrink tension of at least 1380 kPa at 100°C and a zero strength temperature of at least 175°C in each direction. This film is obtained by forming a self-supporting film of the polymer blend, heating the film to a temperature of 90°C to 115°C, stretching the film by a factor of at least five in each of two mutually perpendicular directions in the plane of the sheet, cooling the film under tension, and irradiating the film for a period sufficient to raise the zero strength temperature to 175°C.

The object of each of those processes can be considered as the production of a film having an increased overall shrink energy. Higher overall shrink energy, however, may be achieved only at the expense of other desirable properties, for example a reduction of film strength.

The present invention is based upon the surprising observation that films of certain ethylene polymers which have been uniaxially cold-stretched and then irradiated possess high shrink energy while heat seals formed in the films perpendicular to the direction of stretching are highly resistant to rupture.

In accordance with the present invention, there is provided a process for preparing a heat-shrinkable wrapping which comprises forming a film of an ethylene polymer having a density from 0.915 to 0.935 g/cm³, subjecting the film to uniaxial orientation at a temperature of from 5 to 70°C below the melting point of the polymer, irradiating the oriented film with ionizing radiation, and forming a wrapping by heat-sealing the film along a seam running generally perpendicular to the direction of uniaxial orientation of said film.

According to the process of the invention, irradiation of the film is carried out after the orientation step.

The heat shrinkable wrappings prepared according to the present invention can be shrunk at temperatures below the melting point of the ethylene polymers with a consequent saving in energy. In addition, the seal formed in the wrapping is highly resistant to rupture upon shrinkage. Furthermore, since the ethylene polymer film has been only uniaxially cold-stretched, a second, biaxial orientation and the reheating steps associated with known procedures are eliminated, thereby saving the cost of additional equipment and energy.

The films to which the present invention is applicable are low density polymer films or sheets produced by conventional film-forming techniques, for example, extrusion and casting. The polymer can be a conventional ethylene homopolymer or a copolymer of ethylene with up to 20% by weight of one or more other unsaturated monomers copolymerizable with ethylene. Preferred unsaturated monomers in this respect include acrylic acid, esters of acrylic acid, vinyl acetates and other vinyl esters, and olefinic monomers having from 3 to 8 carbon atoms. The ethylene content of the copolymer, will therefore be at least 80% by weight of the copolymer.

The methods employed to form the polymers are not critical to the success of the invention and are well known in the art. In general, with respect to ethylene homopolymers and to copolymers of ethylene with acrylic acid or acrylic or vinyl esters, it has been found preferable to use conventional high pressure and high temperature techniques to carry out the polymerization. When copolymers of ethylene with other olefinic monomers are desired, the well-known low pressure polymerization techniques have been found useful.

As stated above, the polymeric films or sheets of such polymers may be produced by conventional means, for example extrusion through a slot die or by casting techniques. The important consideration with regard to the film or sheet material, beyond the ethylene content of the polymer, is that its density is within the range of 0.915 to 0.935 g/cm$^3$. Since there is a definite known relationship between the degree of crystallinity and the density of polyethylene, it is convenient to control the density by exercising control over the level of crystallization of the polymer. One method of accomplishing this is to control the molecular structure of the polymer. Since crystallinity in polyethylene is primarily a function of the number of branches along the polymer chain, one may, for example, introduce more side chains and thereby decrease crystallinity. Conversely, one may conduct the reaction of the monomers such that relatively fewer branches are formed and thereby produce a polymer which is more crystalline.

The rate of cooling will also affect the crystallinity of extruded or cast films of polyethylene. A film which undergoes very gradual cooling or annealing from the melt will have a relatively higher crystalline content, and hence higher density, than an otherwise identical film which has been rapidly quenched after formation. These relationships and their utilization to manipulate the physical character of polyethylene products are known in the art. A more detailed discussion may be found in the artile on Ethylene Polymers in Vol. 6 of the *Encyclopedia of Polymer Science and Technology*, N.M. Bikales executive. editor, published by Interscience Publishers (John Wiley & Sons, Inc.).

In accordance with the invention, it has been found that films of such ethylene polymers, either in the form of continuous webs or in discrete sheets, may be stretched in a single direction to derive all of the known and beneficial effects of orientation in that direction without loss of properties, as exemplified by the tear strength, in the transverse direction. Such improvement is desirably accomplished by stretching the film at a temperature below its crystalline melting point and preferably above the glass transition temperature (Tg). In the process of the invention, the stretching temperature is within the range of 70 to 5°C below the melting point of the polymer.

The degree of film elongation (stretch) may be from 50% to 700% of the original length without significant deterioration of transverse properties. Preferably, while the film is being stretched in one direction (for example, along its length), the direction at right angles (its width) is held fixed by mechanical means to prevent necking-down or narrowing of the film.

Stretching a film of this nature in the machine direction below the melting point of the polymer causes the film to have a high shrink energy in the machine direction. However, the shrink forces are such that, during subsequent shrinking, seals usually fail.

In accordance with the invention the film is first oriented in this manner and is then subjected to ionizing radiation, for example a high energy particle beam such as X-rays, gamma rays, high speed electrons and similar energy sources. The duration of irradiation is not critical; dosages of from 1 to 20 megarads, and preferably from 3 to 15 megarads for example 5 megarads are entirely suitable in most cases.

Following orientation irradiation, the film is formed into an enclosure, such as a sleeve, and sealed along a seam which runs generally perpendicular to the direction of orientation in the plane of the film. For example, in most cases the film will be oriented in the machine direction, and the film will therefore be cut in the transverse direction and the seam produced upon formation of the enclosure will also run in the transverse direction. In this way, maximum sheet strength is provided against the stress created by shrinkage of the wrapping.

It has been demonstrated experimentally that the wrappings produced in this way are capable of adequate shrinkage below the melting point of the polymer film and that the wrappings can be shrunk without breakage of the film or rupture of the seal.

The following Examples illustrate the invention.

### Examples

Two films fabricated from a low density polyethylene (Northern Petro Chemical 963 resin) were evaluated. One film was General Film NPC 963 Resin and the other was General Film — Cold Oriented 2X in the machine direction at approximately 90°C.

Samples were prepared for testing by irradiation at 1, 3 and 5 megarads with a high energy electron beam. All samples were then sealed in either the machine direction or the transverse direction. The samples were then cut into strips and supported with the seal under tension after which they were placed in an oven at 95°C for 15 seconds, removed and observed to determine whether the seals had broken after film shrinkage. The results are set forth in the following Table.

TABLE

| | Film | Direction of Seal | Radiation Dose | Pass Rate |
|---|---|---|---|---|
| 1. | General Film NPC—963 Resin No Orientation; No Radiation | M.D. | | 5 passed |
| | | T.D. | | 5 passed |
| 2. | General Film NPC—963 Resin 2X Oriented; No Radiation | M.D. | | 5 passed |
| | | T.D. | | 5 failed |
| 3. | General Film NPC—963 Resin No Orientation; Radiated | M.D. | 1 Mrad | 5 passed |
| | | | 3 Mrad | 5 passed |
| | | | 5 Mrad | 5 passed |
| | | T.D. | 1 Mrad | 5 passed |
| | | | 3 Mrad | 5 passed |
| | | | 5 Mrad | 5 passed |
| 4. | General Film NPC—963 Resin 2X Oriented; radiated | M.D. | 1 Mrad | 5 passed |
| | | | 3 Mrad | 5 passed |
| | | | 5 Mrad | 5 passed |
| | | T.D. | 1 Mrad | 5 failed |
| | | | 3 Mrad | 2 passed |
| | | | 5 Mrad | 5 passed |

M.D. = Machine Direction
T.D. = Transverse Direction

The high pass rate of the unoriented film, (samples 1 and 3) is indicative of lack of shrink energy in the film. Of primary importance, however, is the fact that samples which had been oriented but not irradiated failed with the seal in the transverse direction, that is the direction perpendicular to the machine direction which is the direction of maximum shrinkage. In contrast, the seals and the sheet of the oriented film which had been irradiated with a dose of 3+ megarads provided an increase in strength passing the test twice with a 3 megarad dose and five times with a 5 megarad dose. A heat-shrinkable wrapping formed in this way is economical to produce and highly effective in use.

**Claims**

1. A process for preparing a heat-shrinkable wrapping which comprises forming a film of an ethylene polymer which is polyethylene or a copolymer of ethylene with up to 20% by weight of one or more other monomers copolymerizable with ethylene and which has a density from 0.915 to 0.935 g/cm³, subjecting the film to uniaxial orientation at a temperature of from 5 to 70°C below the melting point of the polymer, irradiating the oriented film with ionizing radiation, and forming a wrapping by heat-sealing the film along a seam running generally perpendicular to the direction of uniaxial orientation of the film.

2. A process according to claim 1, wherein the ethylene polymer is a copolymer of ethylene with at least one of acrylic acid, esters of acrylic acid, vinyl esters and olefinic monomers having from 3 to 8 carbon atoms.

3. A process according to claim 1 or 3, wherein the film is irradiated with from 1 to 20 megarads.

4. A process according to claim 3, wherein the film is irradiated with from 3 to 15 megarads.

5. A process according to claim 4, wherein the film is irradiated with 5 megarads.

**Patentansprüche**

1. Verfahren zur Herstellung einer wärmeschrumpfbaren Umhüllung, das das Erzeugen einer Folie aus einem Ethylenpolymeren, das Polyethylen oder ein Copolymeres des Ethylens mit bis zu 20 Gew.-% eines oder mehrerer anderer Monomeren, die mit Ethylen copolymerisierbar sind, ist, und das eine Dichte von 0,915 bis 0,935 g/cm³ aufweist, das Unterwerfen der Folie einer uniaxialen Orientierung bei einer Temperatur von 5 bis 70°C unterhalb des Schmelzpunktes des Polymeren, das Bestrahlen der orientierten Folie mit einer ionisierenden Strahlung und das Ausbilden einer Umhüllung durch Heißsiegeln der Folie entlang einer Naht umfaßt, die im wesentlichen senkrecht zur Richtung der uniaxialen Orientierung der Folie verläuft.

2. Verfahren nach Anspruch 1, bei dem das Ethylenpolymere ein Copolymeres des Ethylens mit wenigstens einem der folgenden Monomeren ist: Acrylsäure, Ester der Acrylsäure, Vinylester und Olefinmonomere mit von 3 bis 8 Kohlenstoffatomen.

3. Verfahren nach Anspruch 1 oder 2, bei dem die Folie mit von 1 bis 20 Megarad bestrahlt wird.

4. Verfahren nach Anspruch 3, bei dem die Folie mit von 3 bis 15 Megarad bestrahlt wird.

5. Verfahren nach Anspruch 4, bei dem die Folie mit 5 Megarad bestrahlt wird.

**Revendications**

1. Un procédé pour préparer un emballage thermorétractable qui consiste à former une pellicule d'un polymère de l'éthylène consistant en un polyéthylène ou un copolymère de l'éthylène avec une proportion allant jusqu'à 20% en poids d'un ou plusieurs autres monomères copolymérisables avec l'éthylène, et qui a une densité de 0,915 à 0,935 g/cm³, à soumettre la pellicule à orientation uniaxiale à une température inférieure de 5 à 70°C au point de fusion du polymère, à irradier la pellicule orientée par des radiations ionisantes et à former un emballage par thermosoudure de la pellicule le long d'une ligne courant dans une direction générale perpendiculaire à la direction de l'orientation uniaxiale de la pellicule.

2. Un procédé selon la revendication 1, dans lequel le polymère de l'éthylène est un copolymère de l'éthylène avec au moins un composé du groupe de l'acide acrylique, des esters acryliques, des esters vinyliques et des monomères oléfiniques en $C_3$—$C_8$.

3. Un procédé selon la revendication 1 ou 2, dans lequel la pellicule est irradiée par 1 à 20 mégarads.

4. Un procédé selon la revendication 3, dans lequel la pellicule est irradiée par 3 à 15 mégarads.

5. Un procédé selon la revendication 4, dans lequel la pellicule est irradiée par 5 mégarads.